# EUROPÄISCHE PATENTSCHRIFT

(11) **EP 4 269 151 B1**
(45) Veröffentlichungstag und Bekanntmachung des Hinweises auf die Patenterteilung: **12.08.2026**
(21) Anmeldenummer: 23167434.2
(22) Anmeldetag: 11.04.2023
(51) Int. Cl.: B60K 17/28, B60K 17/10, B60K 17/12, B60K 6/20

(54) **PISTENRAUPE ZUR GESTALTUNG UND PFLEGE VON SCHNEEGELÄNDE**
SNOW GROOMER FOR SHAPING AND MAINTAINING SNOW TERRAIN
DAMEUSE POUR LA CONCEPTION ET L'ENTRETIEN DE TERRAIN ENNEIGÉS

(30) Priorität: 25.04.2022 DE 102022203981
(43) Veröffentlichungstag der Anmeldung: 01.11.2023
(73) Patentinhaber: Kässbohrer Geländefahrzeug AG, 88471 Laupheim (DE)
(72) Erfinder: Kuhn, Michael, 88480 Achstetten (DE); Betz, Peter, 88471 Baustetten (DE); Luigart, Christof, 89155 Erbach (DE); Mayer, Stephan, 89597 Munderkingen (DE)
(74) Vertreter: Patentanwälte Ruff, Wilhelm, Beier, Dauster & Partner mbB

(56) Entgegenhaltungen:
- EP-A1- 3 736 154
- DE-B4- 102010 063 795
- DE-U1- 202020 100 047
- US-B2- 10 329 725

## Beschreibung

Die Erfindung betrifft eine Pistenraupe zur Gestaltung und Pflege von Schneegelände mit einem zentralen Verbrennungsmotor, der zum einen für einen Antrieb eines Kettenlaufwerks und zum anderen für einen Antrieb wenigstens eines Arbeitsgeräts der Pistenraupe vorgesehen ist.

Eine derartige Pistenraupe ist aus dem Hause der Anmelderin allgemein bekannt. Die bekannte Pistenraupe weist einen Fahrwerksrahmen auf, auf dem ein Fahrerhaus befestigt ist. Der Fahrwerksrahmen trägt ein Kettenlaufwerk, das auf gegenüberliegenden Seiten des Fahrwerksrahmens jeweils eine Laufwerksseite mit einer umlaufenden Laufwerkskette aufweist. Die Laufwerksketten werden angetrieben durch Turasräder, die über Hydraulikmotoren gesteuert sind. Die Hydraulikmotoren werden durch ein Hydrauliksystem gespeist, das durch einen zentralen Dieselmotor angetrieben ist. Die bekannte Pistenraupe weist zudem als Arbeitsgerät ein heckseitiges Anbaugerät in Form einer Heckfräse sowie eine auf dem Fahrwerksrahmen hinter dem Fahrerhaus angeordnete Windenanordnung auf, die ebenfalls ein Arbeitsgerät der Pistenraupe bildet. Sowohl die Heckfräse als auch die Windenanordnung werden durch eine Arbeitshydraulik angetrieben, die wiederum ebenfalls durch den Dieselmotor gesteuert wird.

Aus der DE 10 2010 063 795 B4 ist eine weitere Pistenraupe bekannt, die mit einem seriellen Hybridantrieb zum Antreiben des Kettenlaufwerks versehen ist. Der serielle Hybridantrieb kombiniert einen zentralen Dieselmotor mit zwei elektrischen Generatoren, die über einen Gleichstromzwischenkreis zwei elektrische Fahrmotoren eines Fahrantriebs für ein Kettenlaufwerk mit Strom versorgen. Der Gleichstromzwischenkreis weist einen Zwischenkreiskondensator auf zur Pufferung einer Zwischenkreisspannung des Gleichstromzwischenkreises. Zusätzlich ist ein vom Zwischenkreiskondensator unabhängiger elektrischer Energiespeicher vorgesehen, der elektrische Energie aus dem Zwischenkreis speichern oder an den Zwischenkreis abgeben kann, wenn Lastspitzen im dynamischen Fahrbetrieb der Pistenraupe auftreten. Dadurch ist es möglich, ohne Drehzahlerhöhung des Dieselmotors zusätzliche elektrische Leistung zur Verfügung zu stellen. Derartige Lastspitzen treten insbesondere bei einem Lenkvorgang der Pistenraupe auf. Aus der EP 3 736 154 ist eine gattungsgemäße Pistenraupe bekannt.

Aufgabe der Erfindung ist es, eine Pistenraupe der eingangs genannten Art zu schaffen, die umweltfreundlich betreibbar ist und dennoch eine gute Qualität bei der Gestaltung und Pflege von Schneegelände liefern kann.

Diese Aufgabe wird dadurch gelöst, dass der Verbrennungsmotor als wasserstoffbetriebener Hubkolbenmotor (H₂-Hubkolbenmotor) ausgebildet ist, und dass dem H₂-Hubkolbenmotor ein elektrisch betriebenes Energiezufuhrsystem zugeordnet ist, das den H₂-Hubkolbenmotor im Betrieb so unterstützt, dass Lastspitzen des Antriebs des Kettenlaufwerks und des Antriebs des wenigstens einen Arbeitsgeräts ausgeglichen werden. Dadurch ist zum einen ein umweltfreundlicher Fahrantrieb für die Pistenraupe geschaffen. Zum anderen ist ein gleichmäßiger und leistungsstarker Antrieb des wenigstens einen Arbeitsgeräts ermöglicht, so dass eine qualitativ gute Bearbeitung des Schneegeländes gewährleistet ist, das die Pistenraupe befährt. Der Erfindung liegt die Erkenntnis zugrunde, dass ein H₂-Hubkolbenmotor eine gegenüber bekannten Dieselmotoren reduzierte Drehzahlstabilität aufweist. Das elektrisch betriebene Energiezufuhrsystem stellt sicher, dass ein aufgrund von Lastspitzen auftretender Drehzahlabfall des H₂-Hubkolbenmotors ausgeglichen wird durch entsprechende Energiezufuhr des elektrisch betriebenen Energiezufuhrsystems. Entsprechende Lastspitzen, die durch einen Rotationsantrieb des wenigstens einen Arbeitsgeräts im Arbeitsbetrieb der Pistenraupe entstehen, können so umweltfreundlich und effizient aufgefangen werden. Gleiches gilt für Lastspitzen, die beim Antrieb des Kettenlaufwerks auftreten wie insbesondere bei einem Lenkvorgang der Pistenraupe.

In Ausgestaltung der Erfindung weist der Antrieb des Kettenlaufwerks zwei Fahrmotoren für zwei Laufwerksseiten des Kettenlaufwerks auf, die elektrisch oder hydraulisch ausgeführt sind. Die Erfindung eignet sich demzufolge sowohl für ein hydraulisches Fahrantriebskonzept als auch für ein elektrisches Fahrantriebskonzept, jeweils kombiniert mit dem H₂-Hubkolbenmotor. Sowohl die elektrische als auch die hydraulische Ausführung arbeiten emissionsfrei.

In weiterer Ausgestaltung der Erfindung weist der Antrieb für wenigstens ein Arbeitsgerät wie insbesondere eine Heckfräse oder eine Windenanordnung wenigstens einen Arbeitsmotor auf, der elektrisch oder hydraulisch ausgeführt ist. Auch bezüglich des Antriebs für das wenigstens eine Arbeitsgerät ist eine elektrische oder eine hydraulische Version ermöglicht, die beide emissionsfrei arbeiten.

In weiterer Ausgestaltung der Erfindung weist das Energiezufuhrsystem einen elektrischen Energiespeicher und eine elektronische Steuereinheit auf, die eine Energieabgabe aus dem Energiespeicher steuert in Abhängigkeit von einer Drehzahl des H₂-Hubkolbenmotors. Kenngröße für die Energieabgabe ist demzufolge die Drehzahl des H₂-Hubkolbenmotors.

In weiterer Ausgestaltung der Erfindung weist das Energiezufuhrsystem zusätzlich eine elektrische Maschine auf, die mit dem elektrischen Energiespeicher verbunden und mechanisch mit einem Verteilergetriebe gekoppelt ist, das dem H₂-Hubkolbenmotor nachgeschaltet ist. Die elektrische Maschine ist sowohl als Generator als auch als Elektromotor betreibbar. Durch die mechanische Ankopplung an das Verteilergetriebe erfolgt eine Umwandlung der elektrischen Energie der elektrischen Maschine in mechanische Energie, die über das Verteilergetriebe, das an den H₂-Hubkolbenmotor angeflanscht ist, in das Antriebssystem eingeleitet werden kann. Diese Ausgestaltung ist insbesondere vorteilhaft, wenn sowohl das Fahrantriebssystem als auch das Arbeitsantriebssystem der Pistenraupe als Hydrauliksysteme ausgeführt sind.

In weiterer Ausgestaltung der Erfindung ist bei elektrischen Fahrmotoren und/oder elektrischem Arbeitsmotor ein Gleichstromzwischenkreis vorgeschaltet, und die elektronische Steuereinheit steuert eine Energieabgabe aus dem Energiespeicher in Abhängigkeit von einer elektrischen Spannung des Gleichstromzwischenkreises. Kenngröße ist demzufolge die elektrische Spannung des Zwischenkreises.

In weiterer Ausgestaltung der Erfindung steuert bei elektrischen oder hydraulischen Fahrmotoren und/oder elektrischem oder hydraulischem Arbeitsmotor die elektronische Steuereinheit eine Energieabgabe aus dem Energiespeicher in Abhängigkeit von einem Drehzahlvergleich zwischen Soll- und Ist-Drehzahlen der Fahrmotoren und/oder des Arbeitsmotors. Kenngrößen bei dieser Ausgestaltung sind demzufolge die Drehzahlen der Fahrmotoren und/oder des wenigstens einen Arbeitsmotors.

In weiterer Ausgestaltung der Erfindung weist die elektronische Steuereinheit einen Boost-Modus auf, der unabhängig von anderen Kenngrößen auf Anforderung durch einen Fahrer der Pistenraupe eine zeitlich begrenzte Energieabgabe aus dem Energiespeicher steuert. Dadurch wird zeitlich begrenzt eine Leistungserhöhung des Antriebssystems der Pistenraupe ermöglicht. Eine entsprechende Anforderung durch den Fahrer der Pistenraupe kann insbesondere bei Bergfahrt und einem Überfahren einer etwas steileren Kuppe erfolgen.

In weiterer Ausgestaltung der Erfindung ist die Steuereinheit zur Ansteuerung der elektrischen Maschine derart vorgesehen, dass abhängig von Funktionsparametern der Fahrantriebe oder des Energiespeichers die elektrische Maschine als Generator zur Energiezufuhr für den Energiespeicher betrieben wird.

In weiterer Ausgestaltung der Erfindung ist die Steuereinheit zur Ansteuerung der elektrischen Maschine derart vorgesehen, dass abhängig von Funktionsparametern der Fahrantriebe oder des Energiespeichers die elektrische Maschine als Generator zur Energiezufuhr für den Energiespeicher betrieben wird. Entsprechende Funktionsparameter sind Soll- und Ist-Drehzahlen der Antriebe für das Kettenlaufwerk und für das wenigstens eine Arbeitsgerät. Weitere geeignete Funktionsparameter sind eine Drehzahl des H₂-Hubkolbenmotors oder der Drehzahlen von Abtriebswellen des Verteilergetriebes.

In weiterer Ausgestaltung der Erfindung ist dem Energiespeicher fahrzeugseitig ein Stromladegerät mit elektrischer Anschlussmöglichkeit an ortsfeste Ladestationen zugeordnet. Dadurch kann der Energiespeicher in der Pistenraupe mobil mit Strom versorgt und geladen werden.

In weiterer Ausgestaltung der Erfindung sind die elektrische Maschine und der Energiespeicher derart leistungsmäßig ausgelegt, dass zeitlich begrenzt ein Betrieb der Antriebe des Kettenlaufwerks ermöglicht ist ohne einen Betrieb des H₂-Hubkolbenmotors. Die Pistenraupe kann demzufolge zeitlich begrenzt rein elektrisch gefahren werden.

In weiterer Ausgestaltung der Erfindung weist der elektrische Energiespeicher eine Kombination aus aufladbaren oder nicht aufladbaren Batteriezellen und Hochleistungskondensatoren auf, um zeitlich begrenzt die Speicherung hoher Lade- und Entladeströme zu ermöglichen. Dadurch können über einen kurzen Zeitraum hohe Lade- und Entladeströme realisiert werden, wodurch eine besonders schnelle und leistungsstarke Reaktion auf Lastspitzen im Fahr- oder Arbeitsbetrieb der Pistenraupe erfolgen kann.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt schematisch in einem Blockschaltbild ein Antriebssystem einer Ausführungsform einer erfindungsgemäßen Pistenraupe,
- Fig. 2: in einem weiteren schematischen Blockschaltbild ein weiteres Antriebssystem einer weiteren Ausführungsform einer erfindungsgemäßen Pistenraupe und
- Fig. 3: schematisch in einem Blockschaltbild ein drittes Antriebssystem einer Ausführungsform einer erfindungsgemäßen Pistenraupe.

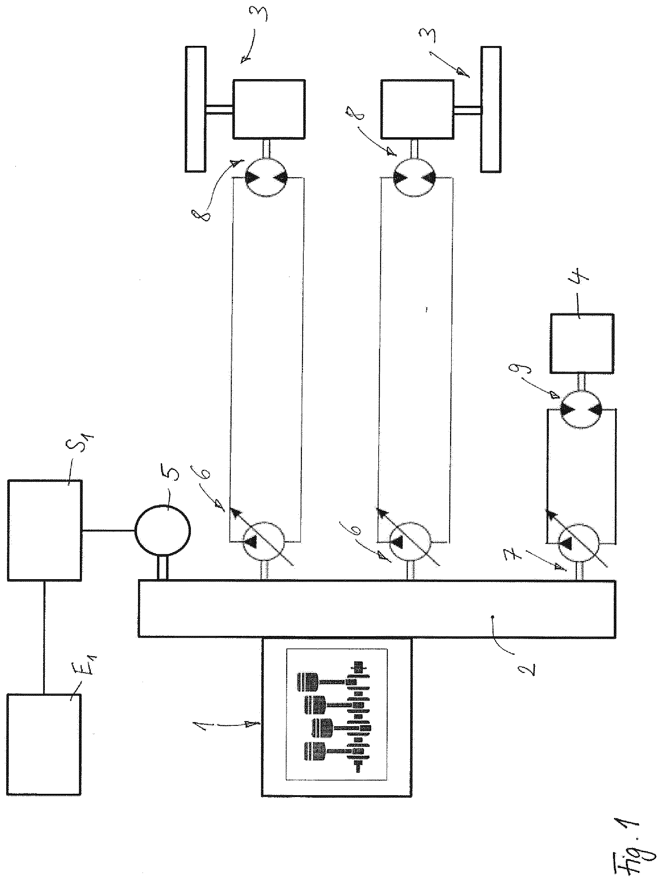

Eine Pistenraupe, wie sie für die Antriebssysteme gemäß den Fig. 1 bis 3 vorgesehen ist, weist einen Fahrwerksrahmen auf, der ein Fahrerhaus trägt, in dem ein Fahrer der Pistenraupe für den Betrieb der Pistenraupe sitzen kann. Der Fahrwerksrahmen ist auf gegenüberliegenden Längsseiten von jeweils einer Laufwerksseite eines Kettenlaufwerks flankiert. Jede Laufwerksseite weist eine umlaufende Kette aus mehreren Kettenbändern und in Fahrzeugquerrichtung auf den Kettenbändern befestigten Kettenstegen auf, die mithilfe von Spurbügeln auf Laufrädern, einem Spannrad und einem Turasrad der Laufwerksseite geführt sind. Die Pistenraupe ist heckseitig mit einem Arbeitsgerät in Form einer Heckfräse versehen, die wenigstens eine durch einen Arbeitsantrieb rotierbare Fräswelle und eine in normaler Fahrtrichtung der Pistenraupe gesehen hinter der wenigstens einen Fräswelle angeordnete Glätteinrichtung aufweist. Die Heckfräse ist an einem Heckgeräteträger des Fahrwerksrahmens lösbar befestigt. Frontseitig ist die Pistenraupe mit einem weiteren Arbeitsgerät in Form eines Räumschilds versehen, das durch den Fahrer der Pistenraupe verstellt werden kann. Fakultativ kann die Pistenraupe zudem mit einer Windenanordnung versehen sein, um einen Betrieb der Pistenraupe auch in steilem Schneegelände zu ermöglichen. Die Windenanordnung ist auf einer Plattform des Fahrwerksrahmens hinter dem Fahrerhaus positioniert und weist ein Windenseil auf, das im Windenbetrieb der Pistenraupe stationär an einem oberen Endbereich eines steilen Hangs befestigt werden kann. Die Windenanordnung weist eine Seilwinde auf, die das Windenseil auf- oder abwickelt und die mit einem Rotationsantrieb versehen ist, der einen Antrieb eines Arbeitsgeräts im Sinne der Erfindung definiert. Auch der Rotationsantrieb für die wenigstens eine Fräswelle der Heckfräse definiert einen Antrieb für ein Arbeitsgerät im Sinne der Erfindung.

Die Ketten der beiden Laufwerksseiten werden angetrieben durch Turasräder, die mittels jeweils eines Fahrantriebs 3, 13 gemäß den Fig. 1 bis 3 synchron oder insbesondere bei Lenkbewegungen unterschiedlich zueinander angetrieben werden können. Die Turasräder sind bei der Pistenraupe heckseitig an der jeweiligen Laufwerksseite vorgesehen, während die Spannräder jeweils frontseitig der jeweiligen Laufwerksseite zugeordnet sind.

Die anhand der Fig. 1 bis 3 dargestellten Antriebssysteme, die die Fahrantriebe 3, 13 in gleicher Weise betreffen wie den Antrieb für wenigstens ein Arbeitsgerät, weisen jeweils einen H₂-Hubkolbenmotor 1 auf, der am Fahrwerksrahmen angeordnet ist. Der H₂-Hubkolbenmotor 1 ist bei jeder der anhand der Fig. 1 bis 3 dargestellten Ausführungsformen über ein Verteilergetriebe 2 mit weiteren Funktionskomponenten des jeweiligen Antriebssystems gekoppelt. Dabei umfasst das jeweilige Antriebssystem sowohl die Fahrantriebe 3, 13 für die Turasräder als auch jeweils wenigstens einen Arbeitsantrieb 9, 14 für wenigstens ein Arbeitsgerät 4, wobei das Arbeitsgerät 4 bei den dargestellten Ausführungsbeispielen eine Heckfräse bildet. Ein entsprechender Arbeitsantrieb 9, 14 für die Heckfräse 4 ist demzufolge ein Rotationsantrieb für wenigstens eine Fräswelle der Heckfräse 4.

Bei der Ausführungsform gemäß Fig. 1 sind die Fahrantriebe 3 und der Arbeitsantrieb 9 hydraulisch ausgeführt. Hierzu sind entsprechende Abtriebswellen des Verteilergetriebes 2 mit jeweils einer Hydraulikpumpe 6, 7 gekoppelt, die jeweils einen Hydraulikmotor 8, 9 steuert. Dabei sind die Hydraulikmotoren 8 über jeweils ein Getriebe mit jeweils einem Turasrad des Fahrantriebs 3 verbunden, um das jeweilige Turasrad anzutreiben. Der Hydraulikmotor 9 für die Heckfräse 4 wird durch die Hydraulikpumpe 7 betrieben und gesteuert.

Um bei auftretenden Lastspitzen, insbesondere durch Lenkbewegungen des Kettenlaufwerks oder durch veränderten Schlupf des Kettenlaufwerks auf einem Schneeuntergrund des Schneegeländes oder aufgrund von Zusatzbelastungen des Rotationsantriebs 9 für die wenigstens eine Fräswelle der Heckfräse 4 eine Überlastung des H₂-Hubkolbenmotors 1 zu vermeiden, ist dem Antriebssystem zusätzlich ein elektrisches Energiezufuhrsystem E1, S1, 5 zugeordnet. Beim Ausführungsbeispiel gemäß Fig. 1 weist das elektrische Energiezufuhrsystem eine elektrische Maschine 5 auf, die mechanisch mit dem Verteilergetriebe 2 gekoppelt ist. Die elektrische Maschine 5 kann sowohl als Elektromotor als auch als Generator betrieben werden, je nachdem, ob dem Verteilergetriebe 2 mechanische Energie zuführt werden muss, oder ob das Verteilergetriebe 2 mechanische Energie abgeben kann. Die elektrische Maschine 5 wird mit Strom gespeist durch einen elektrischen Energiespeicher E₁, wobei eine elektronische Steuereinheit S₁ vorgesehen ist, die eine Energieabgabe oder Energieaufnahme des Energiespeichers E₁ steuert. Der Energiespeicher E₁ ist aus wiederaufladbaren Batteriezellen aufgebaut und kann je nach Leistungsauslegung zusätzlich mit Hochleistungskondensatoren versehen sein. Die elektronische Steuereinheit S₁ ist mit einer Drehzahlüberwachung des H₂-Hubkolbenmotors 1 verbunden. Zudem ist die elektronische Steuereinheit S₁ mit Drehzahlüberwachungen für die Hydraulikmotoren 8 und 9 der Fahrantriebe 3 und des Arbeitsantriebs für die Heckfräse 4 gekoppelt. Sobald die elektronische Steuereinheit S₁ einen relevanten Drehzahlabfall am H₂-Hubkolbenmotor oder an einem der Hydraulikmotoren 8, 9 erfasst, wird die elektrische Maschine 5 mit elektrischer Energie durch den Energiespeicher E₁ gespeist, um als Drehmomentstütze am Verteilergetriebe 2 angreifen zu können. Um insbesondere in einem Teillastbetrieb des H₂-Hubkolbenmotors oder auch bei abgeschalteter Heckfräse 4 oder ähnlichen Lastreduzierungen überschüssige mechanische Energie des Verteilergetriebes 2 nutzen zu können, steuert die Steuereinheit S₁ die elektrische Maschine 5 für derartige Fälle als elektrischen Generator, wodurch dem Energiespeicher E₁ elektrische Energie zugeführt werden kann, die zu einem Aufladen des Energiespeichers E₁ führt.

Die Steuereinheit S₁ ist zudem derart ausgeführt, dass sie zeitlich begrenzt die elektrische Maschine 5 in einem Boost-Modus für das Antriebssystem betreiben kann, so dass zusätzlich zu der über den H₂-Hubkolbenmotor 1 eingebrachten mechanischen Energie auch noch die mechanische Energie der als Elektromotor arbeitenden elektrischen Maschine 5 in das Verteilergetriebe 2 eingeleitet werden kann, wodurch die Leistungsausbeute der Hydraulikpumpen 6, 7 erhöht wird. Ein derartiger Boost-Modus kann vom Fahrerhaus aus angefordert werden durch einen geeigneten Steuervorgang des Fahrers der Pistenraupe.

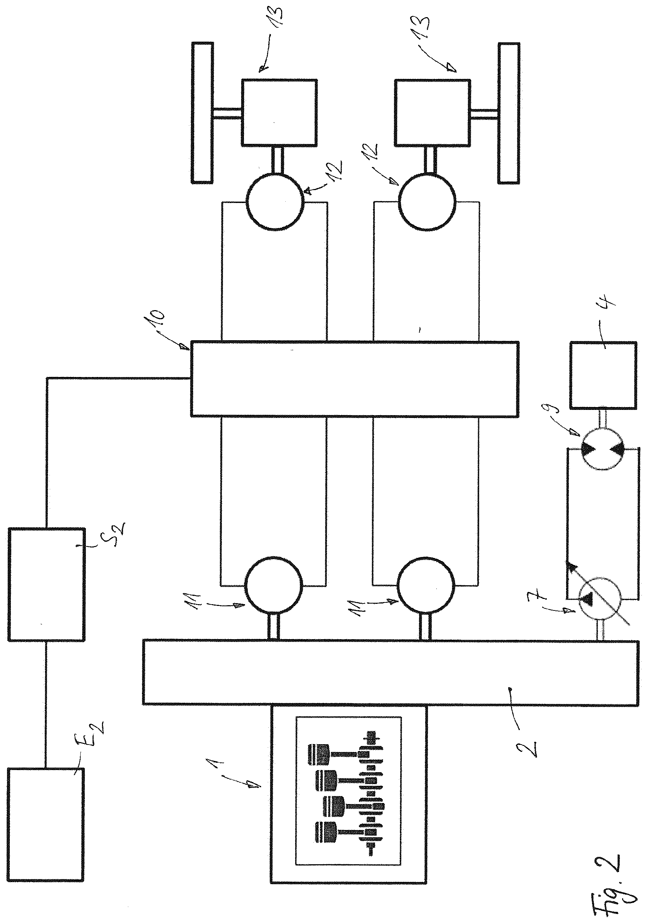

Bei dem Antriebssystem gemäß Fig. 2 weist die Pistenraupe zwar ebenfalls eine hydraulisch betriebene Heckfräse 4 auf. Insoweit wird auf die Ausführungen zu dem Antriebssystem gemäß Fig. 1 verwiesen. Die Fahrantriebe 13 hingegen sind elektrisch ausgeführt. Jeder Fahrantrieb für das jeweils schematisch dargestellte Turasrad weist jeweils einen Elektromotor 12 auf, der über jeweils ein Getriebe mit dem jeweiligen Turasrad gekoppelt ist. Die Elektromotoren 12 sind als mit Gleichstrom betriebene Synchronmotoren ausgeführt. Die Elektromotoren 12 sind mittels eines Gleichstromzwischenkreises 10 mit jeweils einem elektrischen Generator 11 gekoppelt. Die beiden elektrischen Generatoren 11 sind mechanisch an entsprechende Abtriebswellen des Verteilergetriebes 2 angeschlossen, das wiederum durch den H₂-Hubkolbenmotor 1 angetrieben ist. Auch diesem Antriebssystem gemäß Fig. 2 ist ein elektrisches Energiezufuhrsystem zugeordnet, das einen elektrischen Energiespeicher E₂ und eine elektronische Steuereinheit S₂ umfasst. Der Energiespeicher E₂ kann in gleicher Weise ausgeführt sein wie der Energiespeicher E₁, so dass zur Vermeidung von Wiederholungen auf die Beschreibung zum Energiespeicher E₁ verwiesen wird. Der Energiespeicher E₂ ist elektrisch an den Gleichstromzwischenkreis 10 angeschlossen, um bei starken Lastschwankungen im Bereich des Gleichstromzwischenkreises, die auf erhöhten Leistungsbedarf der Elektromotoren 12 zurückzuführen sind, durch elektrische Energiezufuhr den Gleichstromzwischenkreis zu stabilisieren. Dabei werden zum einen die Drehzahl des H₂-Hubkolbenmotors 1, zum anderen eine elektrische Spannung des Gleichstromzwischenkreises 10 und schließlich entsprechende Drehzahlen der Elektromotoren 12 der Fahrantriebe 13 überwacht und in der elektronischen Steuereinheit S₂ verarbeitet, um abhängig von den erfassten Kenngrößen eine Energiezufuhr an den Gleichstromzwischenkreis 10 zu steuern.

Die Steuereinheit S₂ ist zudem so ausgeführt, dass der Energiespeicher E₂ auch in einem zeitlich begrenzten Boost-Modus unabhängig von entsprechendem Leistungsabfall aufgrund von Lastschwankungen den Gleichstromzwischenkreis 10 mit Energie versorgen kann. Schließlich ist die Steuereinheit S₂ so ausgeführt, dass Strom bei Überschuss von elektrischer Energie in dem beschriebenen elektrischen Antriebsstrang aus dem Gleichstromzwischenkreis 10 in den Energiespeicher E₂ geleitet werden kann, um den Energiespeicher E₂ aufzuladen. Typische Energierückführvorgänge treten auf durch Rekuperation bei Talfahrt oder bei Bremsvorgängen der Pistenraupe, wobei dann die Elektromotoren 12 als Generatoren arbeiten und elektrische Energie zurückführen können. Schließlich ist die Steuereinheit S₂ so ausgeführt, dass bei einem niedrigen Ladezustand des Energiespeichers E₂ in einem Teillastbetrieb des H₂-Hubkolbenmotors 1 ebenfalls Energie aus dem elektrischen Antriebsstrang abgeführt und dem Energiespeicher E₂ zugeführt werden kann.

Auch der Betrieb der hydraulisch angetriebenen Heckfräse 4 geht in die Überwachung durch die Steuereinheit S₂ ein. Denn bei entsprechenden Lastspitzen dieses hydraulischen Antriebsstrangs wird zwangsläufig aufgrund der mechanischen Kopplung mit dem Verteilergetriebe 2 diese Lasterhöhung über die elektrischen Generatoren 11 an den Gleichstromzwischenkreis 10 weitergegeben, so dass bei Bedarf in gleicher Weise elektrische Energie aus dem Energiespeicher E₂ zugeführt werden kann.

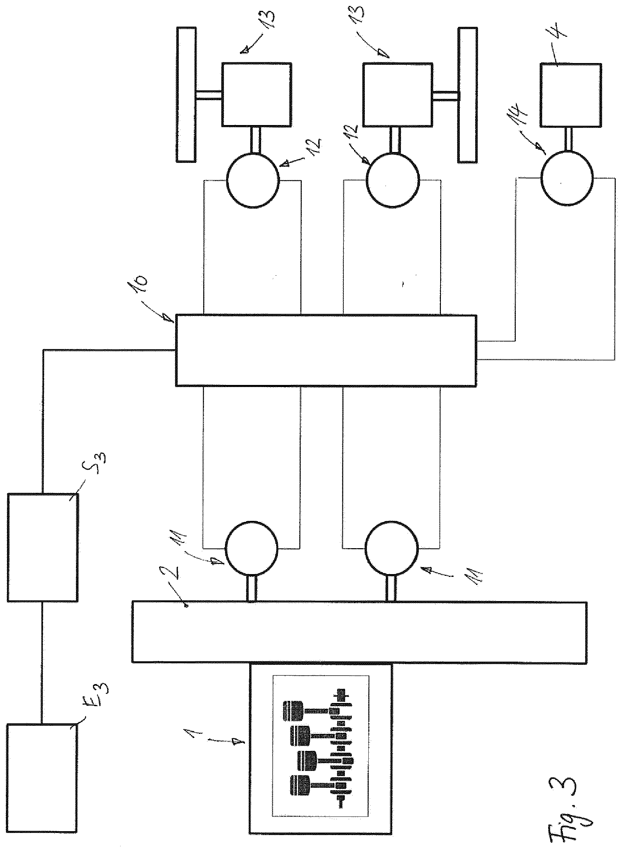

Das Antriebssystem gemäß Fig. 3 stellt ein rein elektrisches Antriebssystem dar, das durch einen H₂-Hubkolbenmotor 1 gespeist wird. Eingangsseitig liegen die gleichen Gegebenheiten vor, nämlich die Kopplung des H₂-Hubkolbenmotors 1 mit einem Verteilergetriebe 2. Die Ausführungsform gemäß Fig. 3 entspricht bis auf den Antrieb für das Arbeitsgerät, d.h. für die Heckfräse 4, dem Antriebssystem gemäß Fig. 2, so dass zur Vermeidung von Wiederholungen ergänzend auf die Beschreibung zur Ausführungsform gemäß Fig. 2 verwiesen wird. Einziger Unterschied bei der Ausführungsform gemäß Fig. 3 ist es, dass hier auch der Rotationsantrieb der Heckfräse 4 elektrisch betrieben wird durch einen Elektromotor 14, der ebenfalls als Synchronmotor ausgeführt ist und über den Gleichstromzwischenkreis 10 gespeist wird. Der Energiespeicher E₃ ist in gleicher Weise über die elektronische Steuereinheit S₃ mit dem Gleichstromzwischenkreis 10 verbunden, wie dies bei der Ausführungsform gemäß Fig. 2 der Fall ist. Die Steuereinheit S₃ ist insoweit modifiziert, als auch als weitere Kenngröße die Drehzahl des Elektromotors 14 für die Heckfräse 4 erfasst wird. Bei Bedarf führt die elektronische Steuereinheit S₃ elektrische Energie aus dem Energiespeicher E₃ dem Gleichstromzwischenkreis 10 zu, um den Gleichstromzwischenkreis 10 zu stabilisieren. Entsprechend umgekehrt ist es analog der zuvor beschriebenen Ausführungsform möglich, den Energiespeicher E₃ auch wieder mit elektrischer Energie aus dem Gleichstromzwischenkreis 10 aufzuladen.

Bei allen Ausführungsbeispielen gemäß den Fig. 1 bis 3 kann jedem Energiespeicher E₁ bis E₃ zusätzlich ein fahrzeugseitig montiertes Ladegerät zugeordnet sein, um bei Bedarf ein elektrisches Laden durch den Anschluss einer stationären elektrischen Ladestation zu ermöglichen.

Auch bei dem Antriebssystem gemäß Fig. 3 ist wie bei den zuvor beschriebenen Antriebssystemen gemäß den Fig. 1 und 2 jeweils ein zeitlich begrenzter Boost-Modus möglich, der vom Fahrerhaus der Pistenraupe aus angefordert wird unabhängig von Lastschwankungen der Antriebskomponenten des jeweiligen Antriebssystems.

## Patentansprüche

1. Pistenraupe zur Gestaltung und Pflege von Schneegelände mit einem zentralen Verbrennungsmotor, der zum einen für einen Antrieb eines Kettenlaufwerks und zum anderen für einen Antrieb wenigstens eines Arbeitsgeräts der Pistenraupe vorgesehen ist, **dadurch gekennzeichnet, dass** der Verbrennungsmotor als wasserstoffbetriebener H2 -Hubkolbenmotor (1) ausgebildet ist, und dass dem H₂-Hubkolbenmotor (1) ein elektrisch betriebenes Energiezufuhrsystem zugeordnet ist, das den H₂-Hubkolbenmotor (1) im Betrieb so unterstützt, dass Lastspitzen des Antriebs des Kettenlaufwerks und des Antriebs des wenigstens einen Arbeitsgeräts ausgeglichen werden.

2. Pistenraupe nach Anspruch 1, **dadurch gekennzeichnet, dass** der Antrieb des Kettenlaufwerks zwei Fahrmotoren (8, 12) für zwei Laufwerksseiten des Kettenlaufwerks aufweist, die elektrisch oder hydraulisch ausgeführt sind.

3. Pistenraupe nach Anspruch 1 oder 2, **dadurch gekennzeichnet, dass** der Antrieb für wenigstens ein Arbeitsgerät wie insbesondere eine Heckfräse (4) oder eine Windenanordnung wenigstens einen Arbeitsmotor (9, 14) aufweist, der elektrisch oder hydraulisch ausgeführt ist.

4. Pistenraupe nach einem der vorhergehenden Ansprüche, **dadurch gekennzeichnet, dass** das Energiezufuhrsystem einen elektrischen Energiespeicher (E₁, E₂, E₃) und eine elektronische Steuereinheit (S₁, S₂, S₃) aufweist, die eine Energieabgabe aus dem Energiespeicher (E₁, E₂, E₃) steuert in Abhängigkeit von einer Drehzahl des H₂-Hubkolbenmotors (1).

5. Pistenraupe nach einem der vorhergehenden Ansprüche, **dadurch gekennzeichnet, dass** das Energiezufuhrsystem zusätzlich eine elektrische Maschine (5) aufweist, die mechanisch mit einem Verteilergetriebe (2) gekoppelt ist, das dem H₂-Hubkolbenmotor (1) nachgeschaltet ist.

6. Pistenraupe nach einem der vorhergehenden Ansprüche, **dadurch gekennzeichnet, dass** bei elektrischen Fahrmotoren (12) und/oder elektrischem Arbeitsmotor (14) ein Gleichstromzwischenkreis (10) vorgeschaltet ist, und dass die elektrische Steuereinheit (S₂, S₃) eine Energieabgabe aus dem Energiespeicher (E₂, E₃) steuert in Abhängigkeit von einer elektrischen Spannung des Gleichstromzwischenkreises (10).

7. Pistenraupe nach einem der vorhergehenden Ansprüche, **dadurch gekennzeichnet, dass** bei elektrischen oder hydraulischen Fahrmotoren (8, 12) und/oder elektrischem oder hydraulischem Arbeitsmotor (9, 14) die elektronische Steuereinheit (S₁, S₂, S₃) eine Energieabgabe aus dem Energiespeicher (E₁, E₂, E₃) steuert in Abhängigkeit von einem Drehzahlvergleich zwischen Soll- und Ist-Drehzahlen der Fahrmotoren (8, 12) und/oder des Arbeitsmotors (9, 14).

8. Pistenraupe nach einem der vorhergehenden Ansprüche, **dadurch gekennzeichnet, dass** die elektronische Steuereinheit (S₁, S₂, S₃) einen Boost-Modus aufweist, der unabhängig von anderen Kenngrößen auf Anforderung durch einen Fahrer der Pistenraupe eine zeitlich begrenzte Energieabgabe aus dem Energiespeicher (E₁, E₂, E₃) steuert.

9. Pistenraupe nach Anspruch 4, **dadurch gekennzeichnet, dass** die Steuereinheit (S₁) zur Ansteuerung der elektrischen Maschine (5) derart vorgesehen ist, dass abhängig von Funktionsparametern der Antriebe des Kettenlaufwerks, des Arbeitsgeräts oder des Energiespeichers die elektrische Maschine (5) als Generator zur Energiezufuhr für den Energiespeicher (E₁) betrieben wird.

10. Pistenraupe nach einem der vorhergehenden Ansprüche, **dadurch gekennzeichnet, dass** dem Energiespeicher (E₁, E₂, E₃) fahrzeugseitig ein Stromladegerät mit elektrischer Anschlussmöglichkeit an ortsfeste Ladestationen zugeordnet ist.

11. Pistenraupe nach einem der vorhergehenden Ansprüche, **dadurch gekennzeichnet, dass** die elektrische Maschine (5) und der Energiespeicher (E₁) derart leistungsmäßig ausgelegt sind, dass zeitlich begrenzt ein Betrieb der Antriebe des Kettenlaufwerks ermöglicht ist ohne einen Betrieb des H₂-Hubkolbenmotors (1).

12. Pistenraupe nach einem der vorhergehenden Ansprüche, **dadurch gekennzeichnet, dass** der elektrische Energiespeicher (E₁, E₂, E₃) eine Kombination aus aufladbaren oder nicht aufladbaren Batteriezellen und Hochleistungskondensatoren aufweist, um zeitlich begrenzt die Speicherung hoher Lade- und Entladeströme zu ermöglichen.

## Claims

1. A snow groomer for shaping and maintaining snow terrain, with a central combustion engine which is provided on the one hand for a drive of a track and on the other hand for a drive of at least one implement of the snow groomer, **characterized in that** the combustion engine is designed as a hydrogen-powered H₂ reciprocating piston engine (1), and **in that** an electrically powered energy supply system is associated with the H₂ reciprocating piston engine (1) and assists said H₂ reciprocating piston engine (1) in its operation such that peak loads on the drive of the track and on the drive of the at least one implement are compensated.

2. The snow groomer according to claim 1, **characterized in that** the drive for the track has two traction motors (8, 12), which are designed electric or hydraulic, for two sides of the track.

3. The snow groomer according to claim 1 or 2, **characterized in that** the drive has at least one working motor (9, 14), which is designed electric or hydraulic, for at least one implement, such as in particular a rear-mounted tiller (4) or a winch assembly.

4. The snow groomer according to any of the preceding claims, **characterized in that** the energy supply system has an electric energy storage device (E₁, E₂, E₃) and an electronic control unit (S₁, S₂, S₃) which controls an energy output from the energy storage device (E₁, E₂, E₃) depending on a speed of the H₂ reciprocating piston engine (1).

5. The snow groomer according to any of the preceding claims, **characterized in that** the energy supply system additionally has an electric machine (5) which is mechanically coupled to a transfer case (2) connected behind the H₂ reciprocating piston engine (1).

6. The snow groomer according to any of the preceding claims, **characterized in that** in the case of electric traction motors (12) and/or electric working motor (14), a DC intermediate circuit (10) is connected in front of them, and **in that** the electronic control unit (S₂, S₃) controls an energy output from the energy storage device (E₂, E₃) depending on a voltage of the DC intermediate circuit (10).

7. The snow groomer according to any of the preceding claims, **characterized in that** in the case of electric or hydraulic traction motors (8, 12) and/or electric or hydraulic working motor (9, 14), the electronic control unit (S₁, S₂, S₃) controls an energy output from the energy storage device (E₁, E₂, E₃) depending on a speed comparison between set and actual speeds of the traction motors (8, 12) and/or of the working motor (9, 14).

8. The snow groomer according to any of the preceding claims, **characterized in that** the electronic control unit (S₁, S₂, S₃) has a boost mode which controls a time-limited energy output from the energy storage device (E₁, E₂, E₃) at the request of a driver of the snow groomer, independently of other parameters.

9. The snow groomer according to claim 4, **characterized in that** the control unit (S₁) is provided for controlling the electric machine (5), such that the electric machine (5) is operated as a generator for supplying energy to the energy storage device (E₁) depending on function parameters of the drives of the track, of the implement or of the energy storage device.

10. The snow groomer according to any of the preceding claims, **characterized in that** a power charger enabling electrical connection to stationary charging stations is associated with the energy storage device (E₁, E₂, E₃) on the vehicle side.

11. The snow groomer according to any of the preceding claims, **characterized in that** the electric machine (5) and the energy storage device (E₁) are designed with an output such that operation of the drives of the track for a limited time is enabled without operation of the H₂ reciprocating piston engine (1).

12. The snow groomer according to any of the preceding claims, **characterized in that** the electric energy storage device (E₁, E₂, E₃) has a combination of chargeable or non-chargeable battery cells and high-performance capacitors, to enable time-limited storage of high charge and discharge currents.

## Revendications

1. Dameuse pour aménager et entretenir les terrains enneigés, avec un moteur thermique central qui est prévu, d'une part, pour l'entraînement d'un train de roulement et, d'autre part, pour l'entraînement d'au moins un outil de la dameuse, **caractérisée en ce que** le moteur thermique est conçu sous forme de moteur H₂ à combustion et explosion (1) fonctionnant à l'hydrogène, et qu'est associé au moteur H₂ à combustion et explosion (1) un système d'alimentation d'énergie fonctionnant électriquement, qui assiste le moteur H₂ à combustion et explosion (1) au cours du fonctionnement de telle sorte que les pics de charge de l'entraînement du train de roulement et de l'entraînement dudit au moins un outil sont compensés.

2. Dameuse selon la revendication 1, **caractérisée en ce que** l'entraînement du train de roulement présente deux moteurs de traction (8, 12) pour deux côtés du train de roulement, qui sont électriques ou hydrauliques.

3. Dameuse selon la revendication 1 ou 2, **caractérisée en ce que** l'entraînement pour au moins un outil tel que, notamment, une fraiseuse arrière (4) ou un dispositif à treuil présente au moins un moteur de travail (9, 14) qui est électrique ou hydraulique.

4. Dameuse selon l'une des revendications précédentes, **caractérisée en ce que** le système d'alimentation en énergie présente un accumulateur d'énergie électrique (E₁, E₂, E₃) et une unité de commande électronique (S₁, S₂, S₃) qui commande une fourniture d'énergie par l'accumulateur d'énergie (E₁, E₂, E₃) en fonction d'une vitesse du moteur H₂ à combustion et explosion (1).

5. Dameuse selon l'une des revendications précédentes, **caractérisée en ce que** le système d'alimentation en énergie présente, de plus, une machine électrique (5) qui est accouplée mécaniquement à une boîte de transfert (2) montée en aval du moteur H₂ à combustion et explosion (1).

6. Dameuse selon l'une des revendications précédentes, **caractérisée en ce que** pour des moteurs de traction électriques (12) et/ou un moteur de travail électrique (14), un circuit intermédiaire à courant continu (10) est connecté en amont, et que l'unité de commande électronique (S₂, S₃) commande une fourniture d'énergie par l'accumulateur d'énergie (E₂, E₃), en fonction d'une tension électrique du circuit intermédiaire à courant continu (10).

7. Dameuse selon l'une des revendications précédentes, **caractérisée en ce que** pour des moteurs de traction électriques ou hydrauliques (8, 12) et/ou un moteur de travail électrique ou hydraulique (9, 14), l'unité de commande électronique (S₁, S₂, S₃) commande une fourniture d'énergie par l'accumulateur d'énergie (E₁, E₂, E₃) en fonction de la comparaison entre les vitesses de consigne et les vitesses réelles des moteurs de traction (8, 12) et/ou du moteur de travail (9, 14).

8. Dameuse selon l'une des revendications précédentes, **caractérisée en ce que** l'unité de commande électronique (S₁, S₂, S₃) présente un mode Boost qui commande une fourniture d'énergie limitée dans le temps, par l'accumulateur d'énergie (E₁, E₂, E₃), indépendamment des autres grandeurs caractéristiques, à la demande d'un conducteur de la dameuse.

9. Dameuse selon la revendication 4, **caractérisée en ce que** l'unité de commande (S₁) pour commander la machine électrique (5) est conçue pour que selon des paramètres de fonctionnement des entraînements du train de roulement, de l'outil ou de l'accumulateur d'énergie, la machine électrique (5) est exploitée comme génératrice pour l'alimentation en énergie de l'accumulateur d'énergie (E₁).

10. Dameuse selon l'une des revendications précédentes, **caractérisée en ce qu'**un chargeur électrique avec possibilité de raccordement électrique à des stations de charge fixes est associé à l'accumulateur d'énergie (E₁, E₂, E₃), côté véhicule.

11. Dameuse selon l'une des revendications précédentes, **caractérisée en ce que** la machine électrique (5) et l'accumulateur d'énergie (E₁) sont dimensionnés en termes de puissance de telle sorte qu'une exploitation des entraînements du train de roulement est possible de manière limitée dans le temps, sans un fonctionnement du moteur H₂ à combustion et explosion (1).

12. Dameuse selon l'une des revendications précédentes, **caractérisée en ce que** l'accumulateur d'énergie électrique (E₁, E₂, E₃) présente une combinaison entre des cellules de batterie rechargeables et non rechargeables et des condensateurs haute puissance afin de permettre l'accumulation de courants élevés de charge et de décharge, de manière limitée dans le temps.
